# EUROPEAN PATENT APPLICATION

(11) **EP 3 067 398 A1**
(43) Date of publication of application: **14.09.2016**
(21) Application number: 16156392.9
(22) Date of filing: 18.02.2016
(51) Int. Cl.: C09D 133/06, C09D 163/00, C09D 167/00, C09D 175/00

(54) **DECORATIVE PRODUCT**

(30) Priority: 24.02.2015 IT MI20150272
(71) Applicant: J Colors S.p.A., 20020 Lainate, Milano (IT)
(72) Inventor: BARDELLI, Achille, I-20020 Lainate, MILANO (IT); GOEBEL-JUNGHANNS, James, I-20020 Lainate, MILANO (IT); GUERZONI, Dante, I-20020 Lainate, MILANO (IT); IANNO, Angelo, I-20020 Lainate, MILANO (IT)
(74) Representative: Croce, Valeria

(57) **Abstract**

The present invention relates to a decorative water-based product for use in the building field.

## Description

The present invention relates to a decorative water-based product for use in the building field.

### Prior art

There are known products allowing to obtain a point-like decorative effect.

For example, ALFATONE was a product launched in the past by Sikkens (Akzo-Nobel) based on polymeric binders dissolved in an organic solvent, with a polychrome point-like component of colored flakes of polymeric nature.

Moreover, there are currently known the so-called powder coatings, obtained by extrusion of polymers with fillers, pigments and possible additives.

These powders, in normal daily use, are used for coating normally metal products by dispensing them with specific spray guns, which guides the particles on the product, to which they remain attached by electrostatic effect.

At this point, the product is heated in a furnace at a temperature higher than the melting point of the polymer.

This causes the formation of a continuous colored film with an even appearance.

No individual water-based and polymer-based painting products are currently known to be used to create heterogeneous decorative effects, such as to evoke the appearance of stone or fabric.

### Summary of the invention

Therefore, the purpose of the present invention is to provide a painting product which allows to create colored surfaces with monochrome and polychrome point-like effects, which reproduce or evoke the effect of natural material, such as fabrics and stones, while imparting particular features of mechanical resistance to the surfaces themselves.

### Object of the invention

A first object of the present invention is a water-based decoration product with a solid micrometric pigmented component of polyester nature.

According to a second object, there is described a process for preparing the decorative product of the invention.

According to a further aspect, there is described the use of the product of the invention for imparting a material aspect to the treated surfaces.

According to another aspect, there is described the use of the product of the invention for imparting washable properties to the treated surfaces.

According to another aspect of the invention, the product described can be used to impart scratch-resistant properties to the treated surfaces.

### Detailed description of the invention

In accordance with the first object of the invention, there is described a composition comprising:
- a resin in an aqueous medium and
- a pigmented, micrometric, solid polyester-based component of polymeric nature;
to which there are optionally added:
- fillers and/or
- a silica component.

As for the resin, this is a water emulsion or dispersion of a polymer of acrylic or acryl-styrene or vinyl nature.

This component represents about 10-35% and preferably about 15-25% by weight (% on the total weight of the decorative product).

The aqueous component of the dispersion of the invention generally is 20-30% and preferably 21-29% or 22-28% or 23-27% or 24-26% or 25% (% on the total weight of the decorative product).

On the other hand, the polyester component is represented in particular by micrometric polyester powder, polyester modified with epoxy or epoxy in the pigmented version.

The polyester component represents about 5-30% and preferably about 5-20% (% on the total weight of the decorative product).

In particular, the molecular weight of the polymer is from about 2,000 to 25,000 and more preferably, from 2,500 to 20,000 Dalton.

More in detail, with polyester modified with epoxy it is intended a polyester mixture with epoxy in a quantity from about 70%/30% to about 60%/40%, respectively.

As mentioned above, for the purposes of the present invention, the polyester component represents the pigmented portion of the decorative product described.

In particular, this is obtained by solid phase co-extrusion of the polymer, polyester-based or a polyester-derivative based, with pigments.

During the extrusion step, which is conducted at a temperature above the melting point of the polymer, there is obtained a fine amalgamation of the mixture, which is then cooled on special cooling belts.

In a subsequent step, it is ground in pin mills so as to obtain a powder with a particle size determined according to the needs.

In particular, for the present purposes, the particle size may be comprised from about 10 to 300 µm and is preferably about 30-250 µm.

According to the present invention, the particle size distribution of the pigmented powder must be such as to allow sufficient stability and miscibility of the final mixture.

In particular, for example, it was found that the percentages indicated in the following table represent the maximum amounts (expressed as a percentage) of powder acceptable in the decorative product of the invention:

| **Pigmented and colored powder** | | | | | | | |
|---|---|---|---|---|---|---|---|
| **µm** | **25** | **50** | **75** | **100** | **150** | **200** | **250** |
| **% MAX** | 20 | 20 | 25 | 30 | 35 | 35 | 40 |

The average size indicated in the table is to be intended as 80% of dimensional composition in the range from +20% to -20% of the specified dimension; therefore, when 100 µm is indicated, it means that 80% is in the range from 80 µm to 120 µm.

Furthermore, it was found that there are optimal particle size distribution curves of the pigmented powder depending on the final use of the decorative product.

It was in fact observed that a more homogeneous and silky appearance is obtained, which tends to mask the point-like effect, when the particle distribution curve is below the average value of 75 µm, while when the distribution curve is above the average value of 75 µm, an increasingly marked point-like appearance of material type is obtained.

As for the further components of the decorative product of the invention, the fillers may be represented by calcium carbonates, either natural and/or synthetic, and/or by kaolin and/or talc and/or mica.

Preferably, the fillers are present in amounts ranging from 0 to 40% by weight (% on total weight of the decorative product).

According to a preferred aspect, the fillers represent about 5, 6, 7, 8, 9, 10, 11, 12, 13, 14, 15, 16, 17, 18, 19, 20 by weight (% on the total weight of the decorative product), where, in an even more preferred aspect, the fillers represent about 5-37% and preferably about 7-20% or about 12%-17% (% on the total weight of the decorative product).

Furthermore, the fillers preferably have a particle size of about 2-120 µm, and even more preferably, of about 5-80 µm.

According to a preferred aspect, the compositions described further comprise additives.

In particular, the additives which can be employed for the preparation of the decorative product of the invention comprise, for example: rheological additives, antifoaming additives, air-removing additives, dispersing additives, wetting agents, biocides.

For example, among the rheological additives, there are: acrylate, polyurethane, cellulose additives.

For example, among the antifoaming additives, there are: mineral or vegetable or silicone additives.

For example, among the air removing additives, there are: silicone additives.

For example, among the dispersing additives, there are: anionic, non-ionic and polyacrylic additives.

For example, among the wetting agents, there are: non-ionic and silicone additives.

For example, among the biocides, there are: MIT, BIT, TMAD, MIT-CMIT.

In a preferred aspect of the invention, the additives are present in an amount of about 0-7%, preferably about 2-6% and even more preferably about 3% (% by weight on the total weight of the decorative product).

In a particular aspect of the invention, the dispersions described comprise a silica component represented by silica sand, silicon dioxide or aluminosilicates.

This is preferably in the range of about 0-40%, more preferably about 22-37% and even more preferably about 25-30% (% on total weight of the decorative product).

In a particular aspect of the invention, the silica component has a particle size of less than about 120 µm, and preferably it is about 40-100 µm.

In order to prepare the decorative product, the acrylic, acrylic-styrene or vinyl polymers are mixed in their state of aqueous dispersion or emulsion with the fillers and/or the silica portion, any additives and the portion of pigmented micrometric solid component obtained according to the above-described methodology.

In accordance with an aspect of the invention, the product of the invention may comprise portions of polyester powder, each having a different color, for example to obtain polychromatic effects.

This is achieved by first preparing a plurality of polyester micrometric portions of different color, which are then mixed together with the other components of the product of the invention.

This allows to obtain monochrome or polychrome color effects.

As described above, the product of the invention is used for decorating surfaces.

In particular, these are internal or external surfaces, where the polyester or polyester-modified pigmented component is preferably used for the exterior.

In general, surfaces mean surfaces made of cement, plasterboard, plastic, plaster, polystyrene, such as insulating panels.

Advantageously, the decorative product of the invention allows to obtain a particularly opaque aesthetic effect which evokes the stone or fabric (the so-called "material effect").

It was surprisingly found that while the appearance may look uneven and rough, the surface treated with the product is smooth and uniform to the touch.

Moreover, it is not a secondary advantage offered by the product described that monochromatic surfaces and polychromatic surfaces can be obtained.

In fact, as described above, granular particles of polyester material of a different color can be mixed, thereby providing an aesthetic "decomposition" effect.

In practice, while the close observation of the colored surface will give the perception of the individual colored particles, at a certain distance the observer will perceive a different color given by the "fusion", intended as an optical effect, of the colors of the individual particles (the particles *per* se remain in fact single and individual).

The decorative product of the invention has further advantages; in fact, thanks to the silica component, when present, it is possible to impart particularly satisfactory mechanical and protective properties to the surface on which it is applied.

The surfaces of interest are preferably represented by surfaces made of cement, plasterboard, plastic, plaster, polystyrene, such as insulating panels.

In particular, it was also observed that the treated surfaces acquire substantial anti-scratch properties.

It was also found that the surfaces treated with the product of the invention have surprising washable properties.

In fact, tests were carried out according to the standards of UNI ISO 19988 which have shown excellent performance of the decorative product described.

In order to obtain such properties, moreover, it is sufficient to apply one or more layers, preferably no more than three and even more preferably no more than two, of the product of the invention to the surfaces.

In a preferred aspect of the invention, once the product described has been applied to the surface to be treated, such a treated surface is not subjected to a heating step, in particular, to a temperature higher than the melting point of the polymer.

In fact, the method does not provide for a curing or melting step during which the particles melt thus creating a homogeneous, continuous and uniform layer which covers the surface.

Therefore, the particles remain single and individual.

### EXAMPLES 1-8

### Dispersions

The following decoration products were obtained by following the above-described procedure:

| **COMPONENT** | **E.g.** | **Ex.** | **Ex.** | **Ex.** | **Ex.** | **Ex.** | **Ex.** | **Ex.** |
|---|---|---|---|---|---|---|---|---|
| | **1** | **2** | **3** | **4** | **5** | **6** | **7** | **8** |
| Water | 25 | 25 | 25 | 27 | 25 | 25 | 25 | 25 |
| Additives | 3 | 3 | 3 | 3 | 3 | 3 | 3 | 3 |
| Silica sand | 25 | 25 | 25 | 25 | - | 37 | 30 | 22 |
| Fillers | 17 | 12 | 7 | - | 37 | - | 17 | - |
| Polyester powder | 5 | 10 | 15 | 20 | 10 | 10 | 10 | 15 |
| 50% dispersion resin | 25 | 25 | 25 | 25 | 25 | 25 | 15 | 35 |

### EXAMPLE 9

### Washability properties

The decorative compositions of Examples 1 to 8 were subjected to the washability assay and gave the following results:

| **Example** | **UNI ISO 11998** |
|---|---|
| **1** | Class 1 |
| **2** | Class 1 |
| **3** | Class 1 |
| **4** | Class 1 |
| **5** | Class 1 |
| **6** | Class 1 |
| **7** | Class 1 |
| **8** | Class 1 |

The UNI ISO 11998 standard defines the procedures for determining the resistance to wet scrubbing and the cleanability of paint coatings.

As a function of the thickness loss after a predetermined number of washing cycles, the paint is classified into five classes: class 1 is the most resistant and class 5 is the least.

### EXAMPLE 10

### Mechanical properties

The preparations of Examples 1 to 8 were subjected to mechanical abrasion resistance tests with rotating resilient Calibrase wheel abraser (CS10 wheel for 1000 cycles with 1000 g load, TABER test) and gave the following results using the EN ISO 7784-2 method:

| **Example** | **EN ISO 7784-2** |
|---|---|
| **1** | < 70 mg |
| **2** | < 70 mg |
| **3** | < 70 mg |
| **4** | < 70 mg |
| **5** | < 70 mg |
| **6** | < 70 mg |
| **7** | < 70 mg |
| **8** | < 70 mg |

The several advantages offered by the present invention are apparent from the above description.

Firstly, the products described allow to obtain surfaces characterized by an aesthetic appearance which evokes that of the stone (the so-called "material effect") or fabrics (such as, for example, a "silky effect").

In order to achieve this effect, which is now only obtainable with complex coating systems which require the use of multiple products, it is sufficient to apply a few steps of the painting product.

The advantage is two-fold, firstly it provides a substantial saving of time, as well as it simplifies the operations of surface decoration.

Moreover, the product of the invention can be applied by using the common tools available, such as a brush, a roller, a steel trowel, a trowel or with airless gun spraying techniques or by using airbrushes.

The fact that the compositions are water-based allows the operator not to be exposed to substances which are potentially harmful to health, while also reducing the consumption of substances harmful to the environment at an industrial level.

Moreover, the compositions described allow to obtain a particularly unexpected anti-scratch effect which gives the painted surfaces a surprising abrasion resistance.

All of this, moreover, is not at the expense of the very pleasant aesthetic appearance.

This is very advantageous, since it allows the expansion of the possible uses of the compositions described.

Moreover, the fact that a surface thus treated can retain its aesthetic appearance intact for a longer time should also not be underestimated.

Those skilled in the art will be able to make modifications or adaptations to the present invention, without, however, departing from the scope of the following claims.

## Claims

1. A decorative product for use in the building field comprising a resin-based component in an aqueous medium, a pigmented micrometric solid component consisting of polyester or derivatives thereof, and further comprising fillers and/or a silica component.

2. A decorative product according to the preceding claim, wherein the resin-based component is in the form of emulsion or dispersion and is acrylic polymer-, acrylic styrene- or vinyl-based.

3. A decorative product according to any one of the preceding claims, wherein the resin-based component represents about 10-35% and preferably about 15-25% by weight on the total weight of the product.

4. A decorative product according to any one of the preceding claims, wherein the pigmented component consisting of polyester or derivatives thereof is included in an amount of about 5-30% and preferably about 5-20% by weight on the total weight of the product.

5. A decorative product according to any one of the preceding claims, wherein the pigmented component is in the form of particles having a size of about 10-300 µm and preferably of about 30-250 µm.

6. A decorative product according to any one of the preceding claims, wherein the polyester derivatives are represented by modified polyester or epoxy.

7. A decorative product according to the preceding claim, wherein polyester modified with epoxy means a polyester mixture with epoxy in amounts from about 70%/30% to about 60%/40%, respectively.

8. A decorative product according to any one of the preceding claims, further comprising additives.

9. A decorative product according to the preceding claim, wherein the additives are present in amounts of about 0-7%, preferably about 2-6% and even more preferably about 3% by weight on the total weight of the product.

10. A decorative product according to claim 8 or 9, where said additives are represented by: rheological additives, antifoaming additives, air removing additives, dispersing additives, wetting agents, biocides.

11. A decorative product according to claim 1, wherein the fillers have a particle size of about 2-120 µm and preferably about 5-80 µm.

12. A decorative product according to claim 1 or 11, wherein the fillers are present in a maximum amount of about 40%, preferably about 5-37% and preferably about 7-20% or about 12%-17% by weight on the total weight of the product.

13. A decorative product according to claim 1, wherein the fillers are represented by natural and/or synthetic calcium carbonates and/or kaolin and/or mica and/or talc.

14. A decorative product according to claim 1, wherein the silica component is silica sand, silicon dioxide or aluminosilicates.

15. A decorative product according to the preceding claim, wherein the silica component is present in a maximum amount of about 40%, preferably about 22-37% and even more preferably about 25-30% by weight on the total weight of the product.

16. A decorative product according to claim 14 or 15, wherein the silica component has a particle size of less than 120 µm and preferably of about 40-100 µm.

17. A method for preparing the decorative water-based product according to any one of the preceding claims, comprising the steps of:
i) preparing a resin-based component in an aqueous medium by mixing acrylic, acryl-styrene or vinyl polymers in the dispersion or emulsion condition;
ii) adding fillers and/or a silica portion and possibly additives; and
iii) mixing with a pigmented micrometric component consisting of polyester or derivatives thereof.

18. A method according to the preceding claim, wherein in step iii), two or more pigmented portions having different colors are added.

19. Use of the decorative water-based product according to any one of the claims 1 to 16 for obtaining decorative effects on internal or external surfaces or for imparting mechanical resistance properties to the surfaces on which it is applied or for imparting washable properties to the surfaces on which it is applied.

20. Use of the decorative water-based product for obtaining decorative effects according to the preceding claim, wherein the particles of the pigmented component are such that the particle size distribution curve is lower than about 75 µm and such a decorative effect is of the silky, monochrome or polychrome, type.

21. Use of the decorative water-based product for obtaining decorative effects according to claim 19, wherein the particles of the pigmented component are such that the particle size distribution curve is higher than about 75 µm and such a decorative effect is of the material, monochrome or polychrome, type.

22. Use of the decorative water-based product according to any one of the claims 1 to 16, according to claim 19 or 20 or 21, wherein such a surface is selected from the group comprising: cement, plasterboard, plastic, plaster, polystyrene, insulating panels.

23. A method for imparting washable properties or scratch-resistant properties to a surface, comprising the step of applying one or more layers, preferably no more than two layers, of the decorative product according to any one of the claims 1 to 16 to said surface.

24. A method according to the preceding claim, wherein said surface is selected from the group comprising: cement, plasterboard, plastic, plaster, polystyrene, insulating panels.
